# EUROPÄISCHE PATENTSCHRIFT

(11) **EP 1 140 320 B1**
(45) Veröffentlichungstag und Bekanntmachung des Hinweises auf die Patenterteilung: **28.03.2007**
(21) Anmeldenummer: 00975761.8
(22) Anmeldetag: 15.09.2000
(51) Int. Cl.: B01D 29/21, B01D 35/147, B01D 35/153, B01D 35/16

(54) **FLUIDFILTER MIT EINEM MONTIERBAREN, ZENTRALEN BAUTEIL**
FLUID FILTER WITH A CENTRAL COMPONENT WHICH CAN BE ASSEMBLED
FILTRE POUR FLUIDES POURVU D'UN COMPOSANT CENTRAL POUVANT ETRE ASSEMBLE

(30) Priorität: 17.09.1999 DE 29916267 U; 06.10.1999 DE 29917562 U
(43) Veröffentlichungstag der Anmeldung: 10.10.2001
(73) Patentinhaber: Hengst GmbH & Co. KG, 48147 Münster (DE)
(72) Erfinder: BAUMANN, Dieter, 48268 Greven (DE); ARDES, Wilhelm, 59387 Ascheberg (DE)
(74) Vertreter: Habbel, Ludwig
(86) Internationale Anmeldenummer: PCT/DE2000/003212
(87) Internationale Veröffentlichungsnummer: WO 2001/021278

(56) Entgegenhaltungen:
- BE-A- 1 011 567
- DE-A- 3 903 675
- DE-U- 29 815 023
- US-A- 5 556 542
- US-A- 5 814 215

## Beschreibung

Die Erfindung betrifft einen Fluidfilter nach dem Oberbegriff des Anspruchs 1.

Derartige Fluidfilter sind dem Erfinder bekannt.

Das zentrale Bauteil ist dabei etwa rohrförmig ausgestaltet. "Etwa rohrförmig" bedeutet dabei, daß kein geschlossenes Rohr vorgesehen sein muß, sondern das zentrale Bauteil kann Öffnungen aufweisen und einen an sich bekannten Stützdom oder einen ebenfalls an sich bekannten Ablassdom oder ein ebenfalls an sich bekanntes Filterumgehungsventil ausbilden. Insbesondere kann vorgesehen sein, das zentrale Bauteil in Form eines Kombinationsbauteils sowohl als Stützdom wie auch als Ablassdom und / oder Filterumgehungsventil auszugestalten.

Das Filtergehäuse kann fest an einem z. B. gegossenen Motorgehäuseteil angeformt sein, so daß die Montage des Filters z. B. in einem Automobilwerk erfolgt, indem das motorseitig vorhandene Filtergehäuse mit den restlichen zugelieferten Komponenten des Filters bestückt wird.

Eine einfache und schnelle Montage des zentralen Bauteiles kann durch eine Rast- oder Schnappverbindung vorgesehen sein, wobei filtergehäuseseitig, d. h. am Filtergehäuse selbst oder an einem mit dem Filtergehäuse verbundenen Bauteil, einer oder mehrere Vorsprünge bzw. Ausnehmungen vorgesehen sind und an dem zentralen Bauteil ein oder mehrere korrespondierende Ausnehmungen bzw. Vorsprünge vorgesehen sind. Um eine gute Federelastizität bei der Verrastung zu erzielen, erstrecken sich die Vorsprünge bzw. Hinterschneidungen nicht um den gesamten Umfang des zentralen Bauteiles, sondern lediglich um Abschnitte dieses Umfangs.

Eine verdrehfeste Lagerung des zentralen Bauteiles, die eine Bewegung um die Längsachse dieses Bauteiles verhindert, stellt dabei sicher, daß die Verrastung zwischen dem zentralen Bauteil und dem Filtergehäuse beibehalten wird und sich das zentrale Bauteil nicht unerwünscht vom Filtergehäuse löst. Diese Verdrehsperre kann beispielsweise durch zusätzliche Ventilkörper sichergestellt werden, die außermittig an dem eigentlichen zentralen Bauteil angebracht sein können.

Der Erfindung liegt die Aufgabe zugrunde, einen gattungsgemäßen Filter dahingehend zu verbessern, daß er preisgünstig und schnell montierbar ist.

Diese Aufgabe wird durch einen Filter mit den Merkmalen des Anspruchs 1 gelöst.

Die Erfindung schlägt mit anderen Worten vor, zunächst eine gemeinsam handhabbare Baugruppe zu schaffen, die den Deckel, den Filtereinsatz und das zentrale Bauteil umfaßt. Eine derartige einheitlich handhabbare Baugruppe kann auf einfache, kostengünstige und schnelle Weise von einer Maschine in das Filtergehäuse eingesetzt werden. Zur Verschraubung des Deckels wird dabei die gesamte Einbaugruppe gedreht. Das zentrale Bauteil wird dadurch ebenfalls drehangetrieben, daß seine Verbindung mit dem Filtereinsatz und / oder mit dem Deckel die Übertragung gewisser Drehmomente ermöglicht, z. B. durch eine Klemmkraft zwischen den miteinander verbundenen Bauteilen, oder durch Verbindungsstege, die bei Überschreiten der gewissen Drehmomente brechen, oder dergleichen.

Dabei ist vorgesehen, daß während des Montagevorganges das zentrale Bauteil mit seinen Anlageflächen gegen den bzw. die entsprechenden Vorsprünge des Filtergehäuses gelangt. Die zunächst erfolgende Drehbewegung, die das zentrale Bauteil gemeinsam mit dem Deckel durchführt, stellt dabei sicher, daß das zentrale Bauteil aus jeder beliebigen anfänglichen Drehstellung in die gewünschte Drehstellung gelangt, in der das zentrale Bauteil hinsichtlich seiner Drehwinkelstellung in einer definierten Position ausgerichtet ist, die einerseits für eine sichere Verrastung mit dem Filtergehäuse sorgt und die weiterhin sicherstellt, daß das zentrale Bauteil in dieser Raststellung zum Aufbau der gewünschten Verdrehsperre ausgerichtet ist.

Zu diesem Zweck ist das zentrale Bauteil gegenüber dem Deckel um seine Längsachse drehbar gelagert, z.B. unter Überwindung der erwähnten Klemmkräfte, durch Bruch der erwähnten Verbindungsstege oder dergleichen. Dabei kann vorgesehen sein, daß das zentrale Bauteil unmittelbar am Deckel oder aber am Filtereinsatz gehalten ist, wobei dann das zentrale Bauteil gegenüber dem Filtereinsatz und/oder dieser gegenüber dem Deckel drehbar gelagert ist. Auf diese Weise wird eine Verschraubungsbewegung für den Deckel ermöglicht, mit der er in das Filtergehäuse eingeschraubt wird, während gleichzeitig das zentrale Bauteil, nach Anlage an den filtergehäuseseitigen Vorsprung, seine Drehweinkelstellung beibehält und sich nicht mehr mitdreht.

Erfindungsgemäß sind daher innen am Filtergehäuse Führungsmittel vorgesehen, die als Verdrehsperre während der Montage dienen und die mit den Anlageflächen des zentralen Bauteiles zusammenwirken. Diese Führungsmittel stellen die korrekte Drehwinkelstellung des zentralen Bauteiles während der weiteren Montage sicher. Beim weiteren Verschraubungsvorgang des Deckels verbleibt daher das zentrale Bauteil in seiner optimalen Drehwinkelstellung und wird lediglich aufgrund des Verschraubungsvorganges des Deckels zunehmend tiefer in das Filtergehäuse eingeführt, bis die Verrastung zwischen zentralem Bauteil und Filtergehäuse erfolgt.

Der Vorsprung, der zusammenwirkend mit der Anlagefläche des zentralen Bauteils die Drehsperre während der Montage bildet, kann durch eine Nase oder Leiste gebildet sein, die in das Innere des Filtergehäuses ragt, der Vorsprung kann jedoch auch durch die Flanke einer Nut gebildet sein, wenn sich die Anlagefläche des zentralen Bauteils in diese Nut erstreckt.

Vorteilhaft kann die während des Betriebs wirksame, ohnehin vorgesehene Verdrehsperre über ihre eigentliche Aufgabe hinaus, im Betrieb des Filters das unbeabsichtigte Lösen des zentralen Bauteils vom Filtergehäuse zu verhindern, auch dazu genutzt werden, die Einführhilfe bzw. Verdrehsperre während der Montage des zentralen Bauteils zu schaffen.

Zu diesem Zweck kann ein filtergehäuseseitig vorgesehener Vorsprung nicht nur in der Höhenlage des Filtergehäuses vorgesehen sein, in welcher er im Betriebszustand des Filters mit den entsprechenden Anlageflächen des zentralen Bauteiles zusammenwirkt. Vielmehr kann dieser filtergehäuseseitige Vorsprung zur Deckelöffnung des Filtergehäuses hin verlängert sein, da von dieser Öffnung her üblicherweise das zentrale Bauteil eingesetzt wird.

Diese Verlängerung des Vorsprungs ist erstens preisgünstig realisierbar und ermöglicht zweitens einen frühen Kontakt zwischen den Anlageflächen am zentralen Bauteil einerseits und dem Vorsprung am Filtergehäuse andererseits, so daß das zentrale Bauteil während seiner Montage zuverlässig in die gewünschte Stellung geführt wird.

Weitere vorteilhafte Ausgestaltungen der Erfindung sind aus den Unteransprüchen ersichtlich.

Ein Ausführungsbeispiel der Erfindung wird anhand der Zeichnungen im folgenden näher erläutert. Dabei zeigt
- Fig. 1: eine Einbaugruppe für einen Fluidfilter.
- Fig. 2: einen geschlossenen Filter in seinem üblichen Betriebszustand, mit montierter Einbaugruppe,
- Fig. 3: den teilweise geöffneten Filter von Fig. 2, bei dem der Deckel teilweise losgeschraubt ist,
- Fig. 4 und 5: jeweils einen Schnitt durch den Filter der Fig. 2 entlang der Linien A - A, anfänglich während der Montage des Filters, und im fertig montierten Zustand des Filters.

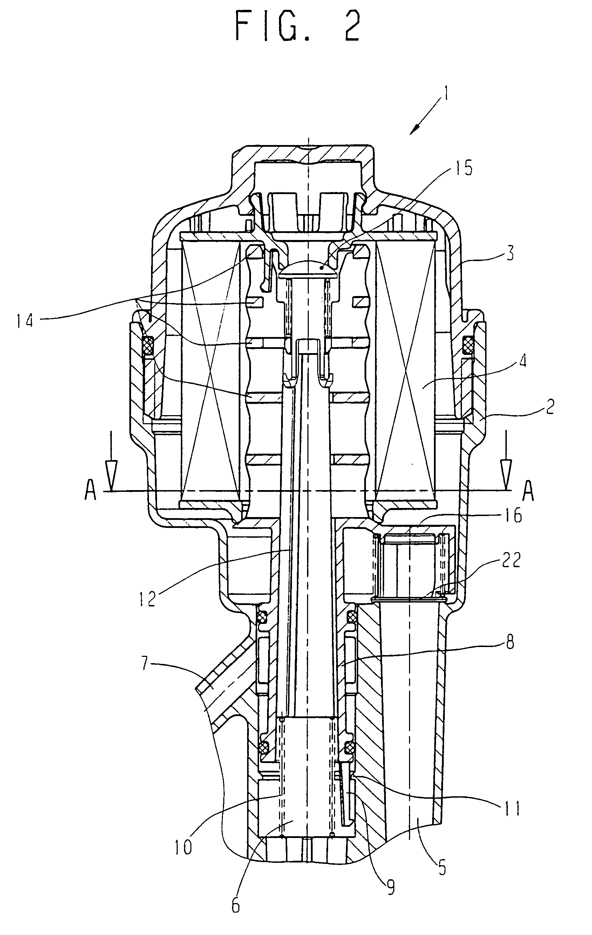

In Fig. 2 ist mit 1 allgemein ein Filter bezeichnet, mit einem Filtergehäuse 2, einem Deckel 3 sowie einem auswechselbaren Filtereinsatz 4. Der dargestellte Filter 1 ist als Ölfilter für eine Verbrennungskraftmaschine vorgesehen. Er weist einen Einlaß 5 für ungefiltertes Rohöl und einen zentralen Auslaß 6 für gefiltertes Reinöl auf sowie eine Ablaßleitung 7, die in Fig. 2 verschlossen ist und durch die lediglich bei einem Filterwechsel - also beim Wechsel des Filtereinsatzes 4 - Öl aus dem Innenraum des Filters abgelassen werden kann, ohne daß dieses abgelassene Öl mit dem Reinöl vermischt werden kann, da keine Verbindung zum Auslaß 6 besteht.

Im Filter 1 ist ein zentrales Bauteil 8 vorgesehen, welches als Ablassdom ausgestaltet ist. Das zentrale Bauteil 8 weist an seinem unteren Ende eine Federkralle 9 auf, die das zentrale Bauteil 8 gegen die Wirkung einer Feder 10 durch Anlage an einem Vorsprung 11 hält, der im Auslaß 6 vorgesehen sind. Die Federkralle 9 und der Vorsprung 11 bilden wechselseitig miteinander zusammenwirkende Vorsprünge und Hinterschneidungen aus, die einen sicheren Halt des zentralen Bauteils 8 auch bei sehr hohen Kräften der Feder 10 sicherstellen.

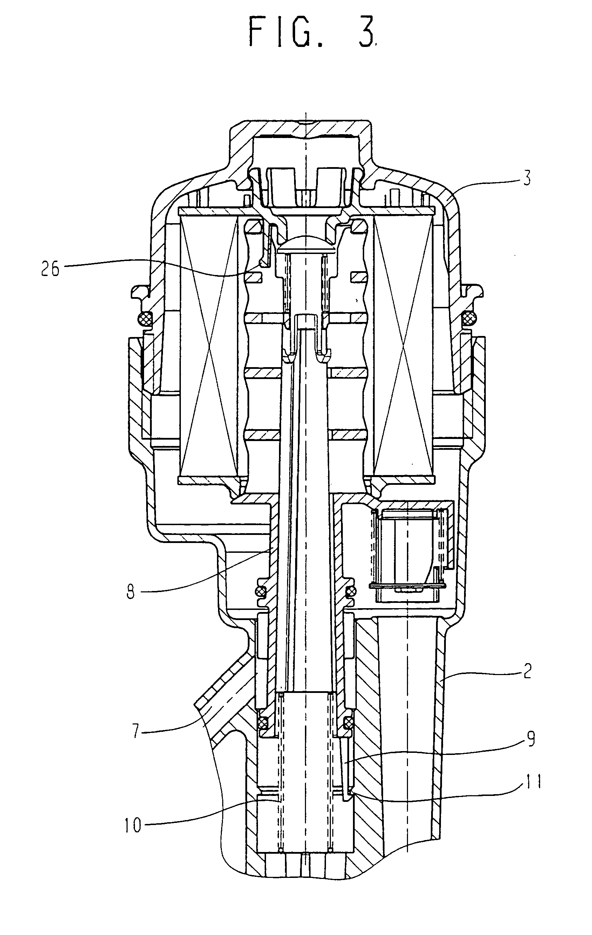

Insbesondere aus Fig. 3 ist ersichtlich, daß bei bereits teilweise abgeschraubtem Deckel 3 die Feder 10 das zentrale Bauteil 8 so weit anhebt, daß dieses Bauteil 8 ausschließlich durch die Rastfunktion gehalten wird, die sich zwischen der Federkralle 9 und dem Vorsprung 11 ergibt. In diesem angehobenen Zustand des Ablassdoms besteht eine Verbindung zwischen dem Filterinnenraum und der Ablassleitung 7, so daß im Filter 1 befindliches Öl durch die Ablassleitung 7 abgelassen wird bevor der Deckel 3 vollständig abgeschraubt ist. Auf diese Weise wird eine verschmutzungsarme Entnahme des Filtereinsatzes 4 ermöglicht.

Das zentrale Bauteil 8 ist als Kombinationsbauteil ausgestaltet: Es bildet einerseits den erwähnten Ablassdom aus. Weiterhin weist es Längsstege 12 auf, mit denen es sich bis in den Innenraum des Filtereinsatzes 4 erstreckt. In diesem Bereich tragen die Längsstege 12 mehrere horizontale Rippen 14, so daß das zentrale Bauteil 8 in diesem Bereich einen Stützdom für den Filtereinsatz 4 ausbildet. Weiterhin trägt das zentrale Bauteil 8 ein Filterumgehungsventil 15 sowie an einer seitlich auskragenden Platte 16 ein Rücklauf-Sperrventil 17 mit einem plättchenförmigen Ventilkörper 22.

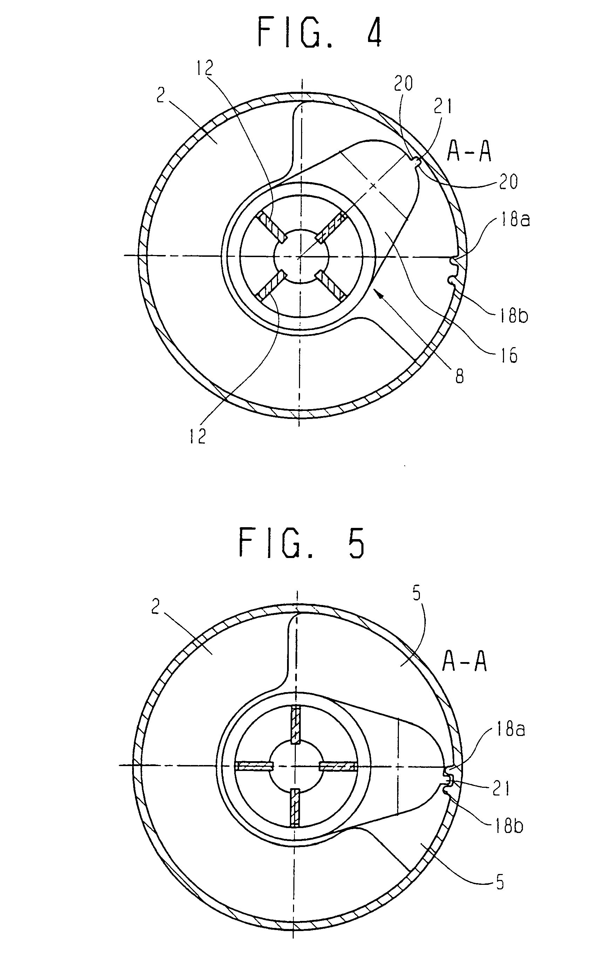

An der Innenwandung des Filtergehäuses 2 sind - wie insbesondere aus den Fig. 4 und 5 ersichtlich ist - zwei angeformte Vorsprünge 18a und 18b vorgesehen, die als Leisten ausgestaltet sind, welche in Längsrichtung des Filters 1 verlaufen. Das zentrale Bauteil 8 weist eine angeformte Nase 21 auf, deren Seitenkanten Anlageflächen 20 ausbilden, mit denen das zentrale Bauteil 8 an den Vorsprüngen 18 anliegt, so daß - wie aus Fig. 5 ersichtlich ist - eine Drehbewegung des zentralen Bauteiles 8 um seine Längsachse im montierten Zustand des Bauteils 8 ausgeschlossen ist.

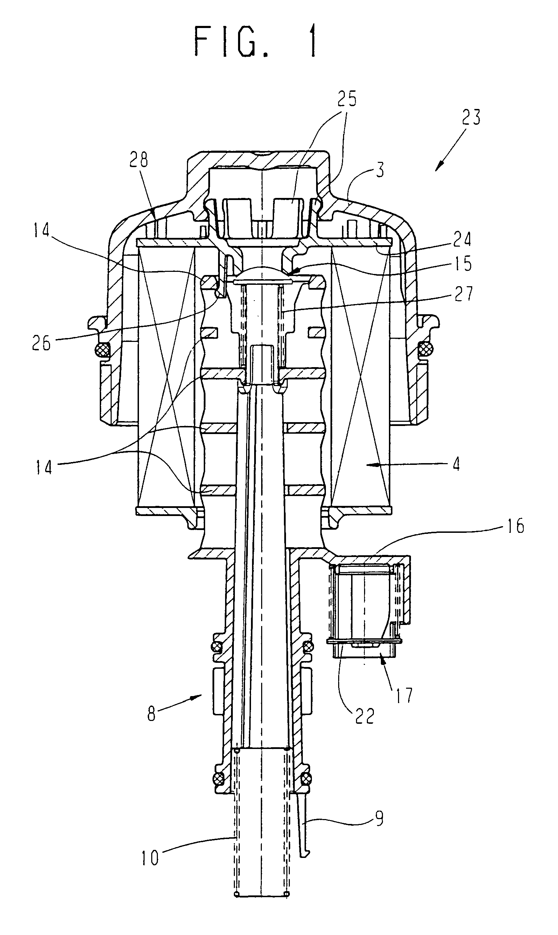

Aus den Fig. 1 bis 3 ist ersichtlich, daß der Vorsprung 11 durch einen entsprechenden Hinterschnitt in der Wandung des Auslasses 6 als umlaufende Rippe ausgestaltet ist, während die Federkralle 9 lediglich entlang begrenzter Winkelabschnitte um den Umfang des zentralen Bauteiles 8 herum angeordnet ist, um eine gute Federbeweglichkeit zu ermöglichen. Unabhängig von der Winkelstellung des zentralen Bauteiles 8 ist daher dessen sicherer Halt im Filtergehäuse 2 gegeben, sobald das zentrale Bauteil 8 tief genug in das Filtergehäuse 2 eingesetzt worden ist und die Federkralle 9 den Vorsprung 11 hintergriffen hat. An Stelle der einen dargestellten Federkralle 9 können zwei oder mehrere Federkrallen 9 vorgesehen sein, um einen besonders sicheren Sitz des zentralen Bauteiles 8 im Filtergehäuse 2 sicherzustellen.

Aus Fig. 1 ist eine Einbaugruppe 23 ersichtlich, die den Deckel 3, den Filtereinsatz 4 und das zentrale Bauteil 8 umfaßt. Dabei ist eine obere Endscheibe 24 des Filtereinsatzes 4 mit dem Deckel 3 durch mehrere Federhaken 25 lösbar verbunden. Einerseits ermöglicht die Kontur des Deckels 3 und der Federhaken 5 eine Drehbeweglichkeit des Filtereinsatzes 4 innerhalb des Deckels 3, andererseits stellt die Klemmkraft der Federhaken 25 bis zu einem gewissen Widerstand sicher, daß der Filtereinsatz 4 mit dem Deckel 3 zusammen gedreht werden kann.

Die obere Endscheibe 24 weist weiterhin in das Innere des Filtereinsatzes 4 ragend einen oder mehrere Rasthaken 26 auf, welche die oberste der Rippen 14 hintergreifen und damit das zentrale Bauteil 8 am Filtereinsatz 4 halten. Dabei ist eine drehfeste Verbindung zwischen Filtereinsatz 4 und zentralem Bauteil 8 vorgesehen. Hierzu sind Flügel am zentralen Bauteil 8 vorgesehen, die sich radial außerhalb des Filterumgehungsventiles 15 bis zur obersten Rippe 14 erstrecken und einen Anschlag für die Rasthaken 26 bilden.

Eine Feder 27 des Filterumgehungsventiles 15 ist bei dem in Fig. 1 dargestellten Zustand der Einbaugruppe 23 entspannt, ggf. kann abweichend von dem dargestellten Ausführungsbeispiel auch vorgesehen sein, daß der Ventilpilz des Filterumgehungsventiles 15 nicht an dem zugeordneten Ventilsitz der oberen Endscheibe 24 anliegt, um auf diese Weise eine gute Drehbeweglichkeit des zentralen Bauteiles 8, welches diesen Ventilpilz trägt, gegenüber dem Filtereinsatz 4 sicherzustellen.

Während der Montage wird die gesamte Einbaugruppe 23 an dem Deckel 3 durch ein Verschraubungswerkzeug erfaßt und in das Filtergehäuse 2 eingeführt. Dabei gelangt das zentrale Bauteil 8 als erstes in das Filtergehäuse 2. Das Verschraubungswerkzeug führt bereits in dieser Stellung der Einbaugruppe 23 eine kontinuierliche Drehbewegung durch, so daß durch die Klemmkräfte der Federhaken 25, unterstützt durch das Eigengewicht der einzelnen Bestandteile der Einbaugruppe 23, und durch die drehfeste Anordnung der Rasthaken 26 am zentralen Bauteil 8 sowohl der Filtereinsatz 4 als auch das zentrale Bauteil 8 gemeinsam mit dem Deckel 3 um ihre Längsachse gedreht werden.

In Fig. 4 ist rein beispielhaft dargestellt, wie das zentrale Bauteil 8 innerhalb des Filtergehäuses 2 ausgerichtet sein kann. Die Drehbewegung des Deckels, bei der das zentrale Bauteil 8 im Uhrzeigersinn mitgenommen wird, kann zunächst ungehindert erfolgen. In axialer Richtung des Filters 1 gesehen ist von den beiden Vorsprüngen 18 der in den Fig. 4 und 5 unten dargestellte Vorsprung 18b im Filtergehäuse 2 höher, also bis näher an den Deckel 3, gezogen als der in den Fig. 4 und 5 jeweils oben dargestellte Vorsprung 18a. Dies führt bei der Drehbewegung des Deckels 3 und der daraus resultierenden Drehbewegung des zentralen Bauteiles 8 dazu, daß die in Drehrichtung vordere Anlagefläche 20 gegen den Vorsprung 18b gelangt, wenn sich das zentrale Bauteil 8 in der Drehwinkelstellung gemäß Fig. 5 befindet.

Die weitere Drehbewegung durch das Verschraubungswerkzeug bewirkt, daß der Deckel 3 zunehmend in das Filtergehäuse 2 eingeschraubt wird. Dadurch, daß das zentrale Bauteil 8 gegenüber dem Deckel 3 drehbeweglich gelagert ist, kann eine Relativbewegung zwischen diesen beiden Teilen der Einbaugruppe 23 erfolgen, so daß das zentrale Bauteil 8 in seiner aus Fig. 5 ersichtlichen Drehwinkelstellung verbleibt und durch die weitere Verschraubung des Deckels 3 lediglich axial weiterbewegt wird und dabei zunehmend tiefer in das Filtergehäuse 2 eingeführt wird. In der aus Fig. 5 ersichtlichen Drehwinkelstellung des zentralen Bauteiles 8 kann der Vorsprung 11 im Auslaß 6 des Filtergehäuses 2 mit der Federkralle 9 des zentralen Bauteiles 8 zusammenwirken, so daß bei Erreichen einer entsprechenden Verschraubungstiefe der Einbaugruppe 23, wie aus Fig. 3 ersichtlich, die Rastverbindung zwischen dem zentralen Bauteil 8 und dem Filtergehäuse 2 bewirkt wird.

Anschließend erfolgt die weitere, automatische Verschraubung, bis der Deckel 3, wie aus Fig. 2 ersichtlich, vollständig in das Filtergehäuse 2 eingeschraubt ist.

Bei einem später vorgesehenen Filterwechsel wird der Deckel 3 aus seiner aus Fig. 2 ersichtlichen Betriebsstellung wieder losgeschraubt. Wenn er die aus Fig. 3 ersichtliche Stellung erreicht hat, ist der Ablauf des im Filterinneren verbleibenden Öls durch die Ablaßleitung 7 möglich. Gleichzeitig wird in dieser Stellung durch die Rastfunktion der Federkralle 9 und des Vorsprungs 11 das zentrale Bauteil 8 im Filtergehäuse 2 gehalten. Das weitere Losschrauben des Deckels 3 bewirkt, daß die demgegenüber erheblich schwächere Verrastung zwischen dem zentralen Bauteil 8 und dem Filtereinsatz 4 gelöst wird, so daß der Deckel 3 mitsamt dem Filtereinsatz 4 aus dem Filter entnommen werden kann, während das zentrale Bauteil 8 filterfest, d. h. am Filtergehäuse 2 verbleibt.

Beim Einsetzen eines neuen Filtereinsatzes 4 kann vorgesehen sein, spezielle materialsparende Ersatz-Filtereinsätze zu schaffen, bei denen die obere Endscheibe 24 nicht mit Rasthaken 26 versehen ist. Bei kleineren Stückzahlen kann preisgünstig auf eine derartige Differenzierung der Filtereinsätze verzichtet werden und auch ein Austausch-Filtereinsatz 4 mit derartigen Rasthaken 26 versehen sein.

In Fig. 1 sind rein schematisch Distanzstege 28 angedeutet, von denen jeweils einer oder mehrere am Deckel 3 und / oder einer oder mehrere am Filtereinsatz 4 vorgesehen sind. Diese Distanzstege 28 dienen dazu, den Filtereinsatz 4 gegen Kippbewegungen innerhalb des Deckels 3 zu sichern. Es kann vorgesehen sein, sie mittels einer entsprechenden radialen Überdeckung als Mitnehmer auszugestalten, die miteinader zusammenwirken, um eine drehende Mitnahme des Filtereinsatzes 4 sicherzustellen, wenn der Deckel 3 durch das Verschraubungswerkzeug gedreht wird. Zu Beginn der Montage können sie auf diese Weise die Übertraung der Drehbewegung vom Deckel 3 auf das am Filtereinsatz 4 befestigte zentrale Bauteil 8 sicherstellen, damit dieses sicher mit seiner Anlagefläche 20 gegen den Vorsprung 18b gelangt. Derartige Mitnehmer könnten die Übertragung höherer Drehkräfte im Vergleich zu den Federhaken 25 ermöglichen und es erlauben, schwächere Federhaken 25 zu vewenden, die beim Filterwechsel die Entfernung des Filtereinsatzes 4 vom Deckel 3 erleichtern.

## Patentansprüche

1. Fluidfilter (1), wie Ölfilter für eine Verbrennungskraftmaschine,
mit einem Filtergehäuse (2), welches durch einen aufschraubbaren Deckel (3) verschließbar ist,
und mit einem Filtereinsatz (4),
und mit einem zentralen, etwa rohrförmigen Bauteil (8), welches sich in den Innenraum des Filters (1) erstreckt,
wobei das zentrale Bauteil (8) Anlageflächen (20) aufweist, mittels derer es verdrehfest im Filter (1) festgelegt ist,
und wobei das zentrale Bauteil (8) einerseits und das Filtergehäuse (2) andererseits Vorsprünge (11) bzw. damit zusammenwirkende Hinterschneidungen aufweisen, derart, dass das zentrale Bauteil (8) mittels einer Rast- oder Schnappverbindung festgelegt ist,
**dadurch gekennzeichnet, dass**
der Deckel (3), der Filtereinsatz (4) und das zentrale Bauteil (8) zu einer gemeinsam handhabbaren Einbaugruppe (23) verbindbar sind,
wobei das zentrale Bauteil (8) gegenüber dem Deckel (3) um seine Längsachse drehbar gelagert ist,
und dass innen am Filtergehäuse (2) Führungsmittel (18a, 18b) vorgesehen sind, die mit den Anlageflächen (20) zusammenwirken, derart, dass sie während der Montage der Einbaugruppe (23), bevor das zentrale Bauteil (8) mittels der Rast- oder Schnappverbindung festgelegt ist, eine den Rast- oder Schnappvorgang ermöglichende Drehsperre für das zentrale Bauteil (8) bilden.

2. Filter nach Anspruch 1, **dadurch gekennzeichnet, dass** die Führungsmittel als Verlängerung eines filtergehäuseseitigen Vorprunges (18b) ausgebildet sind, welcher zur drehfesten Festlegung des zentralen Bauteils (8) im Filtergehäuse (2) dient.

3. Filter nach Anspruch 1 oder 2, **dadurch gekennzeichnet, daß** das zentrale Bauteil (8) mit dem Filtereinsatz (4) lösbar verbunden ist.

4. Filter nach Anspruch 3, **dadurch gekennzeichnet, daß** das zentrale Bauteil (8) mit dem Filtereinsatz (4) drehbeweglich verbunden ist.

5. Filter nach einem der vorhergehenden Ansprüche, **dadurch gekennzeichnet, daß** der Deckel (3) mit dem Filtereinsatz (4) drehbeweglich verbunden ist.

6. Filter nach einem der vorhergehenden Ansprüche, **dadurch gekennzeichnet, daß** das zentrale Bauteil (8) als Ablassdom ausgebildet ist.

7. Filter nach einem der vorhergehenden Ansprüche, **dadurch gekennzeichnet, daß** das zentrale Bauteil (8) als Stützdom ausgebildet ist.

## Claims

1. Fluid filter (1), such as an oil filter for an internal combustion engine,
having a filter housing (2), which can be sealed by a screw-on cover (3), and having a filter element (4),
and having a central, approximately tubular component part (8),
which extends into the inner chamber of the filter element (1),
where the central component (8) incorporates contact faces (20),
by means of which the central component is nonrotatably fixed in the filter (1),
and where the central component (8); on the one hand, and the filter housing (2), on the other hand, incorporate projecting members (11) or undercuts interacting with them such that the central component (8) is fixed by means of a locking or snap connection,
**characterised in that**
the cover (3), the filter element (4) and the central component (8) can be connected to form a modular assembly (23) which can be handled as a unit,
where the central component (8) is rotatably mounted about its longitudinal axis relative to the cover (3),
and **in that** guide members (18a, 18b) are provided inside on the filter housing (2) interact with the contact faces (20) such that during the assembly of the modular assembly (23), before the central component (8) is fixed by means of the locking or snap connection form, they form for the central component (8) a rotary stop which enables the locking or snapping process.

2. Filter in accordance with claim 1, **characterised in that** the guide members are constructed as an extension of a projecting member (18b) on the filter element side which projecting member serves to fix the central component (8) in the filter housing (2) nonrotatably.

3. Filter in accordance with claim 1 or 2, **characterised in that** the central component (8) is detachably connected to the filter element (4).

4. Filter in accordance with claim 3, **characterised in that** the central component (8) is rotatably connected to the filter element (4).

5. Filter in accordance with any of the foregoing claims, **characterised in that** the cover (3) is rotatably connected to the filter element (4).

6. Filter in accordance with any of the foregoing claims, **characterised in that** the central component (8) is constructed as a drainage dome.

7. Filter in accordance with any of the foregoing claims, **characterised in that** the central component (8) is constructed as a support dome.

## Revendications

1. Filtre pour fluides (1) tel qu'un filtre à huile pour un moteur à combustion interne,
avec un corps de filtre (2) qui peut être fermé par un couvercle (3) pouvant être vissé,
et avec un insert de filtre (4),
et avec un élément central (8) sensiblement tubulaire; qui s'étend dans l'espace intérieur du filtre (1), l'élément central (8) possédant des surfaces d'appui (20) au moyen desquelles il est fixé sans possibilité de rotation dans le filtre (1), et l'élément central (8) d'une part et le corps de filtre (2) d'autre part possédant des saillies (11) et des contre-dépouilles coopérant avec celles-ci, de sorte que l'élément central (8) est fixé au moyen d'un assemblage par emboîtement ou encliquetage,
**caractérisé en ce que** le couvercle (3), l'insert de filtre (4) et l'élément central (8) peuvent être assemblés pour former un groupe à insérer (23) pouvant être manipulé d'un seul tenant,
l'élément central (8) étant supporté avec possibilité de rotation autour de son axe longitudinal par rapport au couvercle (3),
et **en ce qu'**il est prévu à l'intérieur sur le corps de filtre (2) des moyens de guidage (18a, 18b) qui coopèrent avec les surfaces d'appui (20), de façon à former pendant le montage du groupe à insérer (23), avant que l'élément central (8) soit fixé au moyen de l'assemblage par emboîtement ou encliquetage, un blocage en rotation permettant l'opération d'emboîtement ou d'encliquetage de l'élément central (8).

2. Filtre selon la revendication 1, **caractérisé en ce que** les moyens de guidage sont conformés comme un prolongement d'une saillie (18b) du côté du corps de filtre, qui sert à fixer en rotation l'élément central (8) dans le corps de filtre (2).

3. Filtre selon la revendication 1 ou 2, **caractérisé en ce que** l'élément central (8) est relié à l'insert de filtre (4) de manière amovible.

4. Filtre selon la revendication 3, **caractérisé en ce que** l'élément central (8) est relié à l'insert de filtre (4) avec possibilité de rotation.

5. Filtre selon l'une des revendications précédentes, **caractérisé en ce que** le couvercle (3) est relié à l'insert de filtre (4) avec possibilité de rotation.

6. Filtre selon l'une des revendications précédentes, **caractérisé en ce que** l'élément central (8) est conformé comme un dôme d'évacuation.

7. Filtre selon l'une des revendications précédentes, **caractérisé en ce que** l'élément central (8) est conformé comme un dôme de support.
